# NEUE EUROPÄISCHE PATENTSCHRIFT

(11) **EP 0 295 395 B2**
(45) Veröffentlichungstag und Bekanntmachung des Hinweises auf die Entscheidung über den Einspruch: **24.07.1996**
(45) Hinweis auf die Patenterteilung: 16.08.1990
(21) Anmeldenummer: 88106547.8
(22) Anmeldetag: 23.04.1988
(51) Int. Cl.: F15B 7/08, F16D 25/12, B60T 11/16

(54) **Geberzylinderanordnung**
Mastercylinder-arrangement
Ensemble maître-cylindre

(30) Priorität: 19.06.1987 DE 3720410
(43) Veröffentlichungstag der Anmeldung: 21.12.1988
(73) Patentinhaber: ITT Automotive Europe GmbH, 60488 Frankfurt (DE)
(72) Erfinder: Saalbach, Kurt, D-6082 Walldorf (DE)

(56) Entgegenhaltungen:
- DE-A- 3 116 584
- DE-A- 3 424 513
- DE-A- 3 529 352
- DE-B- 1 212 428
- DE-C- 1 134 904
- FR-A- 2 458 435
- GB-A- 2 084 678
- GB-A- 2 172 064
- US-A- 3 044 268
- US-A- 3 166 908

## Beschreibung

Die Erfindung betrifft eine Geberzylinderanordnung, insbesondere für hydraulische Kupplungsbetätigung bei Kraftfahrzeugen, nach dem Oberbegriff des Anspruchs 1.

Bei einem aus der US-A-3,166,908 bekannten Geberzylinder ist der Nachlaufraum durch einen Ringraum am kolbenstangenseitigen Ende des Gehäuses ausgebildet. Die zur Abdichtung vorhandene Sekundärmanschette wird durch eine Feder axial gegen ein Verschlußstück vorgespannt gehalten. Diese Feder stützt sich an einem Ring ab, dessen einziger Zweck die Federhalterung ist. Der Kolben wird von einer Druckfeder in seiner Ruhelage gehalten, in der er sich mit seinem pedalseitigen Ende an einer Hülse abstützt, die das Gehäuse in Pedalrichtung verlängert und als Anschlag für den Kolben sowie als Befestigungsstelle für die Schutzkappe dient.

Weniger vorteilhaft ist bei diesem bekannten Geberzylinder dessen erhebliche axiale Baulänge anzusehen, die durch den Einsatz der Hülse bedingt ist. Weiterhin ist dessen Aufbau durch die vielen Einzelteile sowie die zahlreichen Stufen der Kolbenbohrung kompliziert und teuer.

Aus der DE-A- 35 29 352 ist ein Geberzylinder bekannt, bei dem ein Nachlaufraum durch den Innenraum einer als Balg ausgebildeten, in einer umlaufenden Radialnut eines Gehäuses eingeknöpften Schutzkappe gebildet ist, die vor mechanischer Beschädigung durch ein topfförmiges Schutzteil geschützt ist, das am Gehäuse anliegt und mit diesem an einer Fahrzeugspritzwand befestigt ist. Die Kolbenstange des bekannten Geberzylinders weist dabei einen radialen Bund auf, über den sie sich in Lösestellung des Geberzylinders am topfförmigen Schutzteil abstützt.

Die GB-A 2,172,064 zeigt einen Geberzylinder mit einer Anschlagscheibe zwischen Kolben und Sekundärdichtmanschette. Die Sekundärdichtmanschette weist eine innere und eine äußere Dichtlippe sowie einen dazwischen angeordneten Ringsteg auf, welcher mit Noppen versehen ist, die an der Anschlagscheibe anliegen. Die innere Dichtlippe ist mit einem Vorsprung versehen, der im montierten Zustand mit der Anschlagscheibe in Kontakt steht, und eine Deformation der inneren Dichtlippe verhindern soll. Als nachteilig ist hier anzusehen, daß die komplizierte Form der Sekundärdichtlippe zu hohen Herstellungskosten führt.

Aufgabe der vorliegenden Erfindung ist es, eine Geberzylinderanordnung der eingangs genannten Gattung mit verkürzter Baulänge zu schaffen, die unter Beibehaltung von deren hoher Betriebssicherheit ein genaues Einstellen an der Betätigungseinrichtung überflüssig macht. Dabei soll der Montageaufwand möglichst gering und damit kostensparend gehalten werden.

Erfindungsgemäß wird die Aufgabe durch die im kennzeichnenden Teil des Anspruchs 1 angegebenen Maßnahmen gelöst.

Der Kolben wird dabei durch eine außerhalb des Gehäuses, beispielsweise am Pedal angebrachte Rückstellfeder in seine Grundstellung zurückgestellt, in der er über die Anschlagscheibe weich an der Sekundärdichtmanschette anliegt. Durch die Wirkung der Rückstellfeder erfolgt eine geringfügige elastische Verformung der Sekundärdichtmanschette mit gleichzeitigem Abheben der Anschlagscheibe von der radialen Ringfläche. Da der Kolben durch die Rückstellfeder in seine Endlage am Anschlag an der im Gehäuse angeordneten Sekundärdichtmanschette gehalten wird, wird eine Baueinheit mit definierten Maßen geschaffen, die ein genaues Einstellen am Pedal überflüssig macht.

Durch die Anordnung der Rückstellfeder außerhalb des Gehäuses kann auf eine im Druckraum angebrachte Druckfeder verzichtet werden, wodurch die Länge des Geberzylinders um die Blocklänge dieser Druckfeder verkürzt werden kann.

Weiterhin ist es vorteilhaft, daß die Schutzkappe an ihrem der Sekundärdichtmanschette zugewandten Ende in einer Radialnut eines zylindrischen Fortsatzes des Verschlußstückes eingeknöpft ist. Dadurch, daß das Einknöpfen der Schutzkappe innerhalb des Gehäuses erfolgt, wird volle Ausnutzung des zur Verfügung stehenden wirksamen Durchmessers der Längsbohrung bei Beibehaltung des äußeren Einbaumaßes des Geberzylinders erreicht.

Um ein schnelles Einströmen des Druckmittels in den Druckraum bei der Rückstellbewegung des Kolbens zu ermöglichen wird vorgesehen, daß die Anschlagscheibe an ihrem Innendurchmesser mit mindestens einem radialen Ausschnitt versehen ist.

Vorteilhafterweise wird eine Dichtmanschette mit innerer und äußerer Dichtlippe verwendet, deren innere Dichtlippe eine geringere axiale Ausdehnung aufweist als die äußere Dichtlippe, wobei die Anschlagscheibe an der äußeren Dichtlippe zur Anlage kommt. Bei einer derartigen Anordnung wird die innere Dichtlippe der Sekundärmanschette vor Beschädigung durch den Anschlag des Kolbens bei der Rückstellbewegung wirksam geschützt.

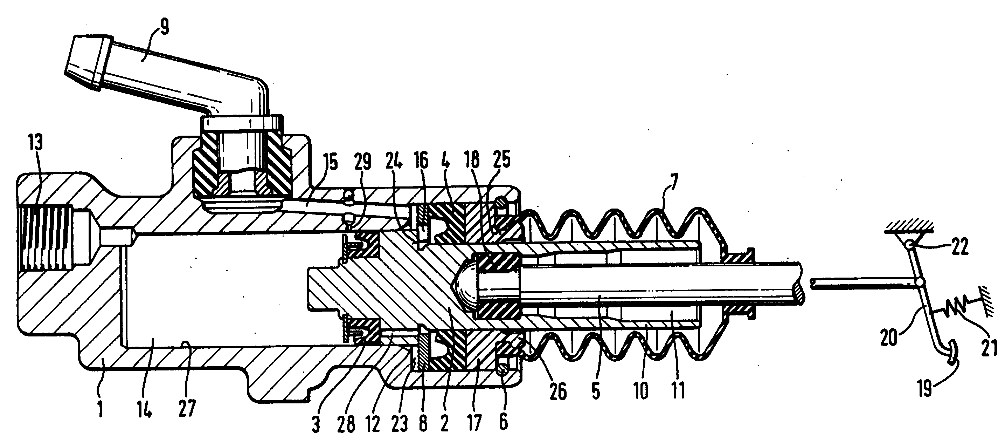

Ein Ausführungsbeispiel der Erfindung ist in der Zeichnung dargestellt und wird im folgenden näher beschrieben, wobei die einzige Figur eine Geberzylinderanordnung nach der Erfindung im Axialschnitt zeigt.

Der in der Zeichnung dargestellte Geberzylinder weist ein Gehäuse 1 auf, in dessen Längsbohrung 27 ein mittels einer Kolbenstange 5 betätigbarer Kolben 2 verschiebbar geführt ist. Eine im Gehäuse 1 vorgesehene Nachlaufbohrung 15 verbindet einen Nachlaufbehälteranschluß 9 eines nicht dargestellten Nachlaufbehälters mit einem Druckraum 14, an den über einen Druckanschluß 13 eine nicht dargestellte zum Kupplungsnehmerzylinder führende Leitung angeschlossen ist.

Die in einer axialen Bohrung 11 eines zylindrischen Fortsatzes 10 des Kolbens 2 mittels eines Kolbenstangenhalters 18 gelagerte Kolbenstange 5 ist an ihrem anderen Ende an einen an einem Bolzen 22 drehbar angeordneten Hebel 20 eines Betätigungspedals 19 angelenkt, der durch eine Rückstellfeder 21 in Lösestellung vorgespannt ist.

Durch die von der Rückstellfeder 21 ausgeübte Zugkraft wird der Kolben 2 in seiner Ausgangsstellung gehalten, in der seine radiale Ringschulter 24 über eine mit radialen Ausschnitten 16 versehene Anschlagscheibe 8 an einer Sekundärdichtmanschette 4 anliegt, die für eine Abdichtung der Längsbohrung 27 nach außen hin sorgt. Die Anschlagscheibe 8 ist dabei axial verschiebbar in einem den Nachlaufraum des Geberzylinders bildenden Ringraum 12 angeordnet, der über mehrere im Kolben 2 ausgebildete axiale Kanäle 28 mit dem Druckraum 14 in Verbindung steht. Der Druckraum 14 ist vom Ringraum 12 durch eine am Kolben 2 unverschiebbar angeordnete Primärdichtmanschette 3 getrennt, die es ermöglicht, bei Betätigung einen hydraulischen Druck im Druckraum 14 aufzubauen. Die Anschlagscheibe 8 kommt dabei zur Anlage an einer am Gehäuse 1 ausgebildeten Ringfläche 23, deren Durchmesser größer ist als der Durchmesser der Längsbohrung 27. Dieser Teil größeren Durchmessers wird durch ein Verschlußstück 17 verschlossen, das darin mittels eines Sicherungsringes 6 axial gesichert ist. Das Verschlußstück 17 ist auf seiner dem Druckraum 14 abgewandten Seite mit einem Fortsatz 26 versehen, in dem eine Radialnut 25 ausgearbeitet ist. In dieser Nut ist eine als Balg ausgebildete Schutzkappe 7 eingeknöpft, die den Innenraum des Gehäuses 1 vor dem Eindringen von Schmutzpartikeln oder dgl. schützt. Mit ihrem anderen Ende steht die Schutzkappe 7 in reibschlüssiger Verbindung mit der Kolbenstange 5.

Die Funktionsweise des erfindungsgemäßen hydraulischen Geberzylinders ist folgende:

Beim Betätigen des Betätigungspedals 19 gegen die Kraft der Rückstellfeder 21 werden die Kolbenstange 5 und der Kolben 2 nach links verschoben. Dadurch schließt die Primärdichtmanschette 3, nachdem sie den Bereich eines Schnüffelloches 29 überfahren hat, den Druckraum 14 gegenüber dem mit Druckmittel gefüllten Ringraum 12 ab, so daß sich im Druckraum 14 ein hydraulischer Druck aufbauen kann, der über den Druckanschluß 13 zum Nehmerzylinder geleitet wird.

Wird der Kupplungsvorgang beendet bzw. das Betätigungspedal 19 entlastet, werden der Kolben 2 und die Kolbenstange 5 unter der Wirkung des im Druckraum 14 sich entspannenden Druckmittels nach rechts in die Grundstellung verschoben, bis der Kolben 2 über die Anschlagscheibe 8 wieder weich an der Sekundärdichtmanschette 4 anliegt. Durch die Wirkung der Rückstellfeder 21 erfolgt eine geringfügige elastische Verformung der Sekundärdichtmanschette 4 mit gleichzeitigem Abheben der Anschlagscheibe 8 von der Ringfläche 23. Da der Kolben 2 durch die Rückstellfeder 21 in seiner Endlage am Anschlag an der im Gehäuse 1 angeordneten Sekundärdichtmanschette 8 gehalten wird, wird eine Baueinheit mit definierten Maßen geschaffen, die ein genaues Einstellen am Pedal überflüssig macht.

### Bezugszeichenliste

- 1: Gehäuse
- 2: Kolben
- 3: Primärdichtmanschette
- 4: Sekundärdichtmanschette
- 5: Kolbenstange
- 6: Sicherungsring
- 7: Schutzkappe
- 8: Anschlagscheibe
- 9: Nachlaufbehälteranschluß
- 10: zylindrischer Fortsatz
- 11: axiale Bohrung
- 1: Ringraum
- 13: Druckanschluß
- 14: Druckraum
- 15: Nachlaufbohrung
- 16: Ausschnitt
- 17: Verschlußstück
- 18: Kolbenstangenhalter
- 19: Betätigungspedal
- 20: Hebel
- 21: Rückstellfeder
- 22: Bolzen
- 23: Ringfläche
- 24: Ringschulter
- 25: Radialnut
- 26: Fortsatz
- 27: Längsbohrung
- 28: Kanal

## Patentansprüche

1. Geberzylinder anordnung, insbesondere für hydraulische Kupplungsbetätigung bei Kraftfahrzeugen, mit einem Geberzy linder bestehend aus einem Gehäuse (1), in dessen Längsbohrung (27) ein mit einem Druckanschluß (13) versehener Druckraum (14) durch einen von einer Kolbenstange (5) verschiebbaren Kolben (2) begrenzt ist, der gegenüber der Längsbohrung (27) mittels einer Primärdichtmanschette (3) abgedichtet ist, die in der durch die Kraft einer Rückstellfeder (21) bedingten Lösestellung des Kolbens (2) eine Verbindung (29) zwischen dem Druckraum (14) und einem Nachlaufraum (12) freigibt, wobei der Nachlaufraum durch einen im Durchmesser gegenüber der Längsbohrung (27) vergrößerten und damit eine radiale Ringfläche (23) des Gehäuses (1) aufweisenden Ringraum (12) am kolbenstangenseitigen Ende des Gehäuses (1) gebildet und durch eine unverschiebbar im Gehäuse (1) angeordnete Sekundärdichtmanschette (4) nach außen hin begrenzt ist, die sich an ihrer dem Ringraum (12) abgewandten Seite an einem im Gehäuse (1) axial gesicherten Verschlußstück (17) abstützt,
und einer als Balg ausgebildeten Schutzkappe (7), die an ihrem dem Gehäuse (1) zugewandten Ende in einer Radialnut (25) eingeknöpft ist und mit ihrem anderen Ende mit der Kolbenstange (5) in Verbindung steht,
**dadurch gekennzeichnet,** daß die Radialnut (25) in einem zylindrischen Fortsatz (26) des Verschlußstückes (17) eingefügt ist, daß die Rückstellfeder (21) außerhalb des Gehäuses (1) angeordnet ist und über die Kolbenstange (5) eine Zugkraft auf den Kolben (2) ausübt,
daß die Sekundärdichtmanschette (4) einen axialen Anschlag für den Kolben (2) in Lösestellung bildet, und daß im Ringraum (12) zwischen radialer Ringfläche (23) und Sekundärdichtmanschette (4) eine stets an der Sekundärdichtmanschette anliegende Anschlagscheibe (8) derart axial verschiebbar angeordnet ist, daß der Kolben (2) in seiner Lösestellung an der Anschlagscheibe (8) anliegt, wobei durch die Wirkung der Rückstellfeder (21) eine gering fügige elastische Verformung der Sekundärdichtmanschette (4) mit gleichzeitigem Abheben der Anschlagscheibe (8) von der radialen Ringfläche (23) eintritt und die Anschlagscheibe (8) bei Betätigung des Kolbens (2) durch die federnde Wirkung der elastisch verformten Sekundärdichtmanschette (4) zur Anlage an der radialen Ringfläche (23) kommt.

2. Geberzylinder anordnung nach Anspruch 1, dadurch **gekennzeichnet,** daß die Anschlagscheibe (8) an ihrem Innendurchmesser mit mindestens einem radialen Ausschnitt (16) versehen ist.

3. Geberzylinder anordnung nach Anspruch 1 oder 2, dadurch **gekennzeichnet,** daß der Kolben (2) eine radiale Ringschulter (24) aufweist, die in Lösestellung zur Anlage an der Anschlagscheibe (8) kommt.

4. Geberzylinder anordnung nach einem der Ansprüche 1 bis 3, dadurch **gekennzeichnet,** daß die Schutzkappe (7) an ihrem der Sekundärdichtmanschette (4) abgewandten Ende mit der Kolbenstange (5) in reibschlüssiger Verbindung steht.

5. Geberzylinder anordnung nach einem der vorhergehenden Ansprüche, dadurch **gekennzeichnet,** daß die Sekundärdichtmanschette (4) eine äußere und eine innere Dichtlippe aufweist, wobei die innere Dichtlippe eine geringere axiale Ausdehnung aufweist als die äußere Dichtlippe, und daß die Anschlagscheibe (8) an der äußeren Dichtlippe anliegt.

## Claims

1. Master cylinder assembly, in particular for the hydraulic clutch actuation in automotive vehicles, including a master cylinder comprised of a housing (1) in whose longitudinal bore (27) a pressure chamber (14) with a pressure port (13) is confined by a piston (2) that is displaceable by a piston rod (5), the piston (2) being sealed in relation to the longitudinal bore (27) by way of a primary sealing sleeve (3) permitting a connection (29) between the pressure chamber (14) and a supply chamber (12) in the release position of the piston (2) which is caused by the force of a resetting spring (21), wherein the supply chamber is an annular chamber (12) at the end of the housing (1) close to the piston rod, the annular chamber having an increased diameter with respect to the longitudinal bore (27) and, thus, a radial annular surface (23) of the housing (1), and being confined outwardly by a secondary sealing sleeve (4) which is unmovable in the housing (1) and, on its side averted from the annular chamber (12), is supported on a closure member (17) which is axially secured in the housing (1),
and a protective cap (7), configured as a bellows, which is fitted into a radial groove (25) at its end close to the housing (1) and, at its other end, is connected to the piston rod (5),
**characterized** in that the radial groove (25) is provided in a cylindrical extension (26) of the closure member (17),
in that the resetting spring (21) is arranged outside the housing (1) and exerts a tensile force on the piston (2) by way of the piston rod (5),
in that the secondary sealing sleeve (4) forms an axial stop for the piston (2) in the release position,
and in that, in the annular chamber (12) between radial annular surface (23) and secondary sealing sleeve (4), a stop washer (8), which is in constant abutment on the secondary sealing sleeve, is axially movable so that the piston (2) in its release position abuts on the stop washer (8), and, under the effect of the resetting spring (21), a slight elastic deformation of the secondary sealing sleeve (4) is produced, with the stop washer (8) simultaneously lifting from the radial annular surface (23), and, when the piston (2) is operated, the stop washer (8) moves into abutment on the radial annular surface (23) due to the resilient effect of the elastically deformed secondary sealing sleeve (4).

2. Master cylinder assembly as claimed in claim 1,
**characterized** in that the stop washer (8) at its internal diameter has at least one radial cut-out (16).

3. Master cylinder assembly as claimed in claim 1 or 2,
**characterized** in that the piston (2) has a radial annular shoulder (24) which moves into abutment on the stop washer (8) in the release position.

4. Master cylinder assembly as claimed in any one of claims 1 to 3,
**characterized** in that the protective cap (7), at its end remote from the secondary sealing sleeve (4), is in frictional engagement with the piston rod (5).

5. Master cylinder assembly as claimed in any one of the preceding claims,
**characterized** in that the secondary sealing sleeve (4) includes an external and an internal sealing lip, the internal sealing lip having smaller axial dimensions than the external sealing lip, and in that the stop washer (8) abuts on the external sealing lip.

## Revendications

1. Dispositif de maître-cylindre, notamment pour la commande hydraulique de l'embrayage sur des véhicules automobiles, comprenant un maître-cylindre constitué d'un boîtier (1) dans l'alésage longitudinal (27) duquel une chambre de pression (14) munie d'un raccord de pression (13) est délimitée par un piston (2), déplaçable par une tige de piston (5), dont l'étanchéité est assurée par rapport à l'alésage longitudinal (27) par une coupelle principale d'étanchéité (3) qui, dans la position débrayée du piston (2) établie par la force d'un ressort de rappel (21), autorise une communication (29) entre la chambre de pression (14) et une chambre de compensation (12), la chambre de compensation étant formée à l'extrémité côté tige de piston du boîtier (1) par une chambre annulaire (12) qui est agrandie en diamètre comparativement à l'alésage longitudinal (27) et présente de ce fait une surface annulaire radiale (23) du boîtier (1), et étant délimitée vers l'extérieur par une coupelle secondaire d'étanchéité (4) disposée dans le boîtier (1) de façon à ne pas pouvoir se déplacer et qui prend appui, au droit de son côté le plus éloigné de la chambre annulaire (12), contre une pièce de fermeture (13) immobilisée axialement dans le boîtier (1), et un capuchon de protection (7) formé d'un soufflet qui est fixé dans une gorge radiale (25) à son extrémité tournée vers le boîtier (1) et est en liaison avec la tige de piston (5) à son autre extrémité,
caractérisé en ce que la gorge radiale (25) est ménagée dans une partie cylindrique en saillie (26) de la pièce de fermeture (17),
en ce que le ressort de rappel (21) est disposé à l'extérieur du boîtier (1) et exerce une force de traction sur le piston (2) par l'intermédiaire de la tige de piston (5),
en ce que la coupelle secondaire d'étanchéité (4) forme une butée axiale pour le piston (2) en position débrayée, et en ce que dans la chambre annulaire (12) entre la surface annulaire radiale (23) et la coupelle secondaire d'étanchéité est disposée contre un disque de butée (8) constamment appliquée contre la coupelle secondaire d'étanchéité, mobile en translation axiale, de telle manière que, dans sa position débrayée, le piston (2) soit en appui contre le disque de butée (8), une légère déformation élastique de la coupelle secondaire d'étanchéité (4) se produisant sous l'action du ressort de rappel, avec soulèvement simultané du disque de butée (8) par rapport à la surface annulaire radiale (23), et le disque de butée (8) entrant en contact avec la surface annulaire radiale (23) lors de l'actionnement du piston (2) sous l'effet de ressort de la coupelle secondaire d'étanchéité (4) déformée élastiquement.

2. Dispositif de maître-cylindre suivant la revendication 1,, caractérisé en ce que le disque de butée (8) est pourvu d'au moins une entaille radiale (16) sur son contour intérieur circulaire.

3. Dispositif de maître-cylindre suivant la revendication 1 ou 2, caractérisé en ce que le piston (2) comporte un épaulement annulaire (24) qui, dans la position de débrayage, vient en appui sur le disque de butée (8).

4. Dispositif de maître-cylindre suivant l'une des revendications 1 à 3, caractérisé en ce qu'à son extrémité tournée vers la coupelle secondaire d'étanchéité (4), le capuchon de protection (7) est monté à frottement sur la tige de piston (5).

5. Dispositif de maître-cylindre suivant l'une des revendications précédentes, caractérisé en ce que la coupelle secondaire d'étanchéité (4) présente une lèvre d'étanchéité extérieure et une lèvre d'étanchéité intérieure, la lèvre d'étanchéité intérieure présentant une plus faible dilatation axiale que la lèvre d'étanchéité extérieure, et en ce que le disque de butée (8) est en appui contre la lèvre d'étanchéité extérieure.
